# EUROPÄISCHE PATENTSCHRIFT

(11) **EP 2 134 555 B1**
(45) Veröffentlichungstag und Bekanntmachung des Hinweises auf die Patenterteilung: **13.03.2013**
(21) Anmeldenummer: 08707170.0
(22) Anmeldetag: 22.01.2008
(51) Int. Cl.: B60G 7/02, B60G 21/055, F16F 1/373, F16F 3/093

(54) **BEFESTIGUNGSELEMENT, INSBESONDERE ZUR VERBINDUNG ZWEIER TEILE IN EINEM FAHRWERK**
FASTENING ELEMENT, IN PARTICULAR FOR CONNECTING TWO PARTS IN A CHASSIS
ÉLÉMENT DE FIXATION, EN PARTICULIER POUR L'ASSEMBLAGE DE DEUX PIÈCES DANS UN CHÂSSIS

(30) Priorität: 05.02.2007 DE 102007005567
(43) Veröffentlichungstag der Anmeldung: 23.12.2009
(73) Patentinhaber: MacLean-Fogg Component Solutions GmbH, 65835 Liederbach (DE)
(72) Erfinder: GÖRG, Alexander, 65366 Geisenheim (DE)
(74) Vertreter: Gosdin, Michael
(86) Internationale Anmeldenummer: PCT/EP2008/000437
(87) Internationale Veröffentlichungsnummer: WO 2008/095600

(56) Entgegenhaltungen:
- WO-A-98/34045
- FR-A- 2 240 838
- GB-A- 2 032 574
- JP-A- 3 279 082
- JP-A- 55 106 810
- US-A- 4 385 025
- US-A- 5 807 010
- US-A1- 2002 171 220
- US-A1- 2003 209 870
- US-A1- 2005 279 910
- US-A1- 2006 043 654
- US-A1- 2006 226 622
- US-A1- 2006 255 516

## Beschreibung

Die Erfindung betrifft ein Befestigungselement zur Verbindung zweier Teile in einem Fahrwerk, das eine zentrische Achse aufweist, auf der in axialem Abstand zueinander mindestens zwei Trägerelemente aus dämpfendem Material angeordnet sind, wobei die beiden zu verbindenden Teile an zwei unterschiedlichen axialen Positionen der Achse von dem Befestigungselement gehalten werden.

Befestigungselemente dieser Art werden benötigt, um beispielsweise in Fahrzeug-Radaufhängungen zwei Teile, die im Betrieb gewisse Bewegungen ausführen, relativ zueinander festzulegen. Derartige Befestigungselemente werden auch als Koppelstangen bezeichnet. Sie sorgen dafür, dass die relativ zueinander festzulegenden Teile schwingungsarm gehalten sind.

Bei vorbekannten Lösungen ist eine zentrale Metallachse vorgesehen, auf die rotationssymmetrisch ausgebildete Trägerelemente aufgeschoben werden. Dabei sind die Trägerelemente so geformt, dass zwei Trägerelemente zwischen sich ein zu haltendes Teil festlegen können. Die Trägerelemente bestehen dabei aus einem geeigneten Kunststoffmaterial, so dass ein hinreichendes Dämpfungsverhalten erzielt werden kann. Dabei hat sich die Verwendung von Polyurethan bewährt.

Das Dokument US-A-2003/0209870 offenbart ein Befestigungselement zur Verbindung zweier Teile in einem Fahrwerk, das eine zentrische Achse aufweist, auf der in axialem Abstand zueinander vier Trägerelemente aus dämpfendem Material angeordnet sind und mit zwei angeschraubten Muttern gehalten werden, wobei die beiden zu verbindenden Teile an zwei unterschiedlichen axialen Positionen der Achse von dem Befestigungselement gehalten werden, wobei jedes Trägerelement jeweils aus zwei unterschiedlichen Bauteilen besteht, wobei das eine Bauteil aus einem elastischen, dämpfenden Material besteht, das eine größere Härte als das andere Bauteil aufweist, wobei das andere Bauteil ebenfalls aus einem elastischen dämpfenden Material besteht, wobei die beiden Bauteile konzentrisch um die Achse und axial aneinander angrenzend angeordnet sind und wobei das eine Bauteil das zu verbindende Teil kontaktiert und das andere Bauteil von dem zu verbindenden Teil beabstandet ist und eine Flanschplatte kontaktiert.

Das Dokument WO-A-98/34045 offenbart ein Befestigungselement zur Verbindung eines Bauteils mit dem Fahrzeugrahmen, das eine zentrische Achse aufweist, auf der in axialem Abstand zueinander zwei Trägerelemente aus dämpfendem Material angeordnet sind, wobei die beiden zu verbindenden Teile an zwei unterschiedlichen axialen Positionen der Achse von dem Befestigungselement gehalten werden, wobei jedes Trägerelement jeweils aus zwei unterschiedlichen Bauteilen aus zwei unterschiedlichen Materialien besteht, wobei das eine Bauteil aus einem elastischen, dämpfenden, absorbierenden Material (z.B. Kautschuk oder Polyurethan) besteht, wobei das andere Bauteil aus einem elastischen Material (Nylon) besteht, das eine größere Härte als das andere Bauteil aufweist, wobei die beiden Bauteile konzentrisch um die Achse und axial aneinander angrenzend angeordnet sind, sodass das Bauteil mit größerer Härte den Fahrzeugrahmen kontaktiert und das Bauteil mit geringerer Härte von Fahrzeugrahmen beabstandet ist, und wobei jedes Trägerelement an seinem radial außenliegenden Rand von einer Blechschale eingefasst wird.

Das Dokument US-A-2006/0255516 offenbart ein Befestigungselement zur Verbindung eines Bauteils mit dem Fahrzeugrahmen, das eine zentrische Achse aufweist, auf der in axialem Abstand zueinander zwei Trägerelemente aus dämpfendem Material angeordnet sind, wobei die beiden zu verbindenden Teile an zwei unterschiedlichen axialen Positionen der Achse von dem Befestigungselement gehalten werden, wobei eines der Trägerelemente aus zwei unterschiedlichen Bauteilen aus zwei unterschiedlichen Materialien besteht, wobei das eine Bauteil aus Kautschuk besteht, das eine größere Härte als das andere Bauteil aufweist, das aus feinzelligem Polyurethan besteht, wobei das Bauteil mit größerer Härte den Fahrzeugrahmen kontaktiert und das Bauteil mit geringerer Härte von dem Fahrzeugrahmen beabstandet ist. Die untere Seite des Fahrzeugrahmens wird direkt von einem Trägerelement aus feinzelligem Polyurethan kontaktiert.

Das Dokument FR-A-2 240 838 offenbart ein Befestigungselement zur Verbindung eines Stabilisators an einem Achsenarm einer Kraftfahrzeug-Radaufhängung, wobei das Ende des Stabilisators mit einer Öse ausgerüstet ist, an der elastische Polster, welche durch Blechschüsseln versteift sind, mit einem Distanzrohr in ihrer Mittenöffnung angeordnet sind, welches elastische Glieder trägt, die sich an den mit Blechschüsseln versteiften elastischen Polstern abstützen, wobei das Rohr an beiden Enden fassförmigen Auflageschüsseln trägt, zwischen denen und den elastischen Polstern mit einer Vorspannung die Federungsglieder eingelegt sind.

Das Dokument US-A-2006/0226622 offenbart ein Fahrzeugaufhängungssystem mit einem Befestigungselement mit einem Befestigungselementkopf und einem Befestigungselementschaft, eine erste Scheibe, eine erste Hülse, einen Lenkerarm mit einer Lenkerarmöse, eine zweite Hülse, eine zweite Scheibe, ein Abstandshalterrohr, eine dritte Scheibe, eine dritte Hülse, eine Stabilisatorstange mit einer Stabilisatorstangenöse, eine vierte Hülse, eine vierte Scheibe und eine Mutter. Jede der der Hülsen weist ein Basisende und ein Domende auf, wobei die jeweiligen Domenden mit der Lenkerarmöse bzw. mit der Stabilisatorstangeöse in Eingriff gelangen.

Ähnliche lösungen zeigen die GB 2032 575 A, die US 2005/0279910 A1, die US 5,807,010**,** die JP 03-279082 A, die **JP 55-106810A** und die US 2002/0171220 A1.

Sowohl bei der Materialauswahl für die Trägerelemente als auch bei deren Ausformung sind dabei Grenzen zu beachten, die durch die aufzunehmenden Kräfte definiert sind.

Es hat sich herausgestellt, dass Koppelstangen der eingangs genannten Art diesbezüglich noch Wünsche offenlassen. Es ist insbesondere als negativ empfunden worden, dass unerwünschte Einflüsse in Form von Biegemomenten auftreten, wenn das Befestigungselement so dimensioniert werden muss, dass es hohe Haltekräfte aufnehmen kann.

Der Erfindung liegt daher die Aufgabe zugrunde, ein Befestigungselement der eingangs genannten Art so fortzubilden, dass es in der Lage ist, hohe Kräfte aufzunehmen und dabei dennoch die Einleitung von unerwünschten Kräften und Momenten gering hält. Weiterhin wird angestrebt, dass das Trägerelement leicht herstellbar und montierbar sein soll, wodurch sich eine kostengünstige Realisierung ergeben soll. Damit soll das Fahrverhalten des Fahrzeugs verbessert werden, das mit dem Fahrwerk ausgestattet ist, in dem das Befestigungselement eingebaut ist.

Diese Aufgabe wird durch die Merkmale des Anspruchs 1 gelöst.

Die beiden unterschiedlichen Bauteile sind dabei bevorzugt konzentrisch um die Achse und axial aneinander angrenzend angeordnet. Das eine Bauteil besteht bevorzugt aus Kunststoff. Besonders bevorzugt kann der Kunststoff Polyurethan sein. Um die Festigkeit dieses Bauteils zu erhöhen, kann vorgesehen werden, dass es mit Verstärkungsfasern versehen ist, wobei vor allem an Glasfasern oder an Kohlenstofffasem gedacht ist. Das andere Bauteil besteht bevorzugt ebenfalls aus einem elastischen, dämpfenden Material. Dabei ist bevorzugt ein elastomeres Material, insbesondere ein Material auf Kautschukbasis oder auf Silikonbasis, vorgesehen.

Die beiden Bauteile sind gemäß einer besonders bevorzugten Ausführungsforrn durch einen Zwei-Komponenten-Spritzgießprozess hergestellt. Alternativ können die beiden Bauteile natürlich auch erst durch einen Montageprozess zu den Trägerelementen zusammengebaut werden.

Eines der Bauteile, nämlich das aus weicherem Material, kann eine ringförmige Gestalt mit im Radialschnitt rechteckiger Form aufweisen. Alternativ kann auch eine ringförmige Gestalt mit im Radialschnitt keilförmiger, kreisförmiger oder elliptischer Kontur vorgesehen werden. Die axiale Erstreckung des Bauteils kann im Falle der keilförmigen Struktur mit zunehmendem Abstand von der Achse ansteigen.

Weiterhin sieht eine Fortbildung der Erfindung vor, dass eines der Bauteile eine Zentrierfläche, insbesondere eine solche mit zylindrischer Form, für das andere Bauteil aufweist. Die Zentrierfläche kann so ausgestaltet sein, dass sie eine Anlagefläche für den radial innenliegenden Rand eines der Bauteile bildet. Möglich ist es auch, dass zur Zentrierung des einen Bauteils ein separates Bauteil eingesetzt wird, das die Zentrierfläche aufweist.

Gemäß der Erfindung wird mindestens ein Trägerelement an seinem radial außenliegenden Rand von einem zumindest abschnittsweise hülsenförmigen Bauteil eingefasst. Mit dieser Ausgestaltung wird erreicht, dass das radial nach außen gerichtete Verdrängen insbesondere von weichem Material eines der Bauteile begrenzt wird. Das zumindest abschnittsweise hülsenförmige Bauteil besteht dabei zumeist aus Metall oder aus Kunststoff. Im Falle der Ausbildung des hülsenförmigen Bauteils aus Kunststoff ist bevorzugt Polyamid vorgesehen. Dieser kann mit Verstärkungsfasern verstärkt sein, insbesondere mit Glasfasern oder Kohlenstofffasern. Das zumindest abschnittsweise hülsenförmige Bauteil kann weiterhin eine axiale Anlagefläche für eines der Baueile aufweisen.

Gemäß der Erfindung weist das zumindest abschnittsweise hülsenförmige Bauteil ferner einen Hinterschnitt zur formschlüssigen Festlegung mindestens eines der Baueile auf. Mit dieser Ausgestaltung wird erreicht, dass eine vormontierte Einheit geschaffen werden kann, die verliersicher gehandhabt werden kann. Es kann auch vorgesehen werden, dass zwischen dem hülsenförmigen Bauteil und mindestens einem der Bauteile im montierten Zustand ein Presssitz vorliegt, um einen festen Verbund zu schaffen.

Mindestens zwei axial aneinander angrenzende Trägerelemente können mit korrespondierenden Führungsflächen versehen werden, die die beiden Trägerelemente bei einer relativen axialen Verschiebung zueinander führen. Diese Führungsflächen dienen zusätzlich auch der besseren Führung der Trägerelemente in die Durchgangsbohrung der zu klemmenden beiden Teile im Fahrwerk, wodurch die Montage des Befestigungselements gemäß dessen Funktion sicherer gestaltet wird. Die Führungsflächen können dabei nach Art einer Male-Female-Konfiguration zusammenwirken und so für eine gute Führung der beiden Bauteile sorgen, wenn sie axial aufeinander zu bewegt werden. Die Führungsflächen weisen dabei bevorzugt im Radialschnitt eine kegelige Form auf. Die Führungsflächen können schließlich an axialen Vorsprüngen der Trägerelemente angeordnet sein.

Zwei der Trägerelemente können durch ein weiteres, teilweise hülsenförmiges Bauteil auf definiertem Abstand gehalten werden.

Durch die Ausgestaltung der Trägerelemente als mindestens zweiteiliges Bauteil unter Verwendung unterschiedlich harter Materialien kann erreicht werden, dass - vor allem im Zusammenwirken mit den weiteren genannten Maßnahmen - unerwünschte Kräfte und Momente, insbesondere Biegemomente, reduziert werden. wobei dennoch relativ große Kräfte problemlos aufgenommen werden können.

Es ist möglich, eine vormontierte, verliersichere Einheit zu schaffen, so dass der Handhabungsaufwand deutlich geringer wird, verglichen mit vorbekannten Lösungen. Es wird damit insbesondere ermöglicht, die Logistik der Koppelstange und ihrer Zusammenbauteile, insbesondere der Trägerelemente, positiv zu beeinflussen, da komplette Einheiten vorbereitet und an die Montagestelle geliefert werden können.

In der Zeichnung ist ein Ausführungsbeispiel der Erfindung dargestellt. Es zeigen:
- Fig. 1: schematisch ein Befestigungselement zur Halterung zweier Teile einer Fahrzeug-Aufhängung in geschnittener, perspektivischer Ansicht,
- Fig. 2: den rechten oberen Endbereich des Befestigungselements in vergrößerter Ansicht und im Radialschnitt, wobei eine zu Fig. 1 etwas alternativ gestaltete Ausführungsvariante dargestellt ist, und
- Fig. 3: den oberen Bereich des Befestigungselements gemäß Fig. 2 in einer alternativen Ausgestaltung.

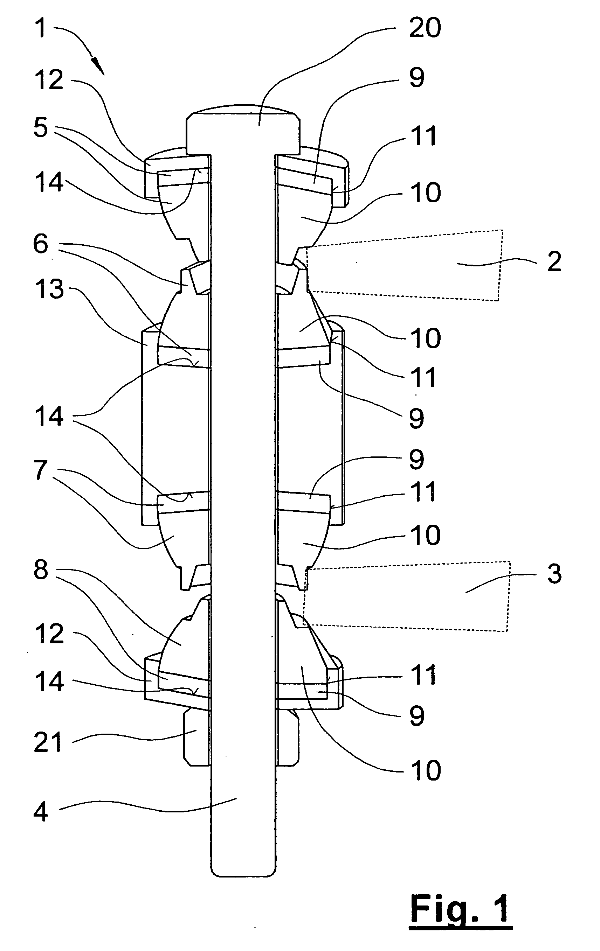

In den Figuren ist ein Befestigungselement 1 zu sehen, das als Koppelelement bezeichnet wird; sie wird unter der Handelsbezeichnung Pogostik vertrieben. Das Befestigungselement dient dazu, zwei Teile 2 und 3 (s. Fig. 1) eines Fahrwerks relativ zueinander festzulegen, was in schwingungsdämpfender und sicherer Weise zu geschehen hat. Die Teile 2 bzw. 3 sind in Fig. 1 nur schematisch angedeutet.

Hierzu weist das Befestigungselement 1 eine zentrale Achse 4 aus Stahl auf, auf der mehrere Trägerelemente 5, 6, 7, 8 angeordnet sind. Jedes Trägerelement 5, 6, 7, 8 ist rotationssymmetrisch ausgebildet. Im Radialschnitt haben die Trägerelemente 5, 6, 7, 8 eine einseitig spitz zulaufende Form. Möglich ist auch eine einfache zylindrische Form. Je zwei Trägerelemente, nämlich die Trägerelemente 5 und 6 und die Trägerelemente 7 und 8, sind so auf der Achse 4 angeordnet, dass sie mit ihren spitz zulaufenden Bereichen aufeinander zu gerichtet sind. Demgemäß bilden die Trägerelemente 5 und 6 sowie 7 und 8 zwischen sich Aufnahmebereiche für die Teile 2 bzw. 3.

Die Achse 4 hat in oberen Bereich einen Kopf 20. Dort kann auch ein Gewinde mit einer Mutter vorgesehen werden. Im unteren Bereich ist - was nicht näher illustriert ist - ein Gewinde vorgesehen, auf das eine Mutter 21 aufgeschraubt ist. Damit ergibt sich im montierten Zustand des Befestigungselements 1 ein fester Verbund, mit dem die beiden Teile 2 und 3 fest gelagert werden können.

Wesentlich ist, dass die Trägerelemente 5, 6, 7, 8 im Ausführungsbeispiel aus je zwei unterschiedlichen Bauteilen 9 und 10 bestehen, wobei die Bauteile 9, 10 aus verschiedenen Materialien bestehen.

Das Bauteil 9 ist aus Material gefertigt, das weicher ist als das des Bauteils 10. Das Material des Bauteils 9 ist bevorzugt ein elastomeres Material, das eine Kautschukbasis oder Silikonbasis haben kann.

Demgegenüber ist das Bauteil 10 relativ hart. Es besteht im Ausführungsbeispiel aus Polyurethan, dessen Härtegrad anwendungsspezifisch gewählt wird. Möglich sind freilich auch andere thermoplastische Kunststoffe. Das Trägerelement 5, 6, 7, 8 und damit die Bauteile 9 und 10 sind teilweise in hülsenförmigen Bauteilen 12 bzw. 13 untergebracht. Das hülsenförmige Bauteil 12 besteht im Ausführungsbeispiel aus Metall. Eine Fertigung aus einem faserverstärkten Kunststoff, bevorzugt aus Polyamid mit Verstärkungsfasern aus Glas oder Kohlenstoff, ist auch möglich.
Das hülsenförmige Bauteil 13 besteht im Ausführungsbeispiel aus einem faserverstärkten Kunststoff, bevorzugt aus Polyamid mit Verstärkungsfasern aus Glas oder Kohlenstoff. Eine Fertigung aus Metall ist auch möglich.

Das obere und das untere hülsenförmige Bauteil 12 weisen im Radialschnitt eine L-förmige und damit napfartige Kontur auf und bilden damit axiale

Anlageflächen 14 für das weichere Bauteil 9. Das härtere Bauteil 10 grenzt entsprechend an das Bauteil 9 an, wobei die beiden Bauteile 9, 10 flächig über eine Ringfläche aneinander anliegen.

Das mittlere hülsenförmige Bauteil 13 weist axiale Anlageflächen 14 für zwei Bauteile 9 auf, die durch das Bauteil 13 auch axial voneinander beabstandet werden.

Da die hülsenförmigen Abschnitte der Bauteile 12 und 13 bauartbedingt die - weichen und entsprechend leicht verformbaren - Bauteile 9 in axialer und radialere Richtung umgreifen, stellen sie für den Rand 11 der Bauteile 9 und 10 insoweit bzw. im Rahmen ihrer axialen Erstreckung eine Randeinfassung dar.

Bei der Beaufschlagung mit einer axialen Kraft auf das Befestigungselement 1 verhindern daher die hülsenförmigen Bauteile 12, 13, dass das relativ weiche Material des Bauteils 9 radial verdrängt bzw. gequetscht wird. Damit werden ein hoher Dämpfungskomfort und geringe unerwünschte Kräfte und Momente, insbesondere Biegemomente, erreicht und dennoch eine hohe axiale Steifigkeit des Befestigungselements 1 aufrecht erhalten, ohne dass es zu Funktionseinbußen käme.

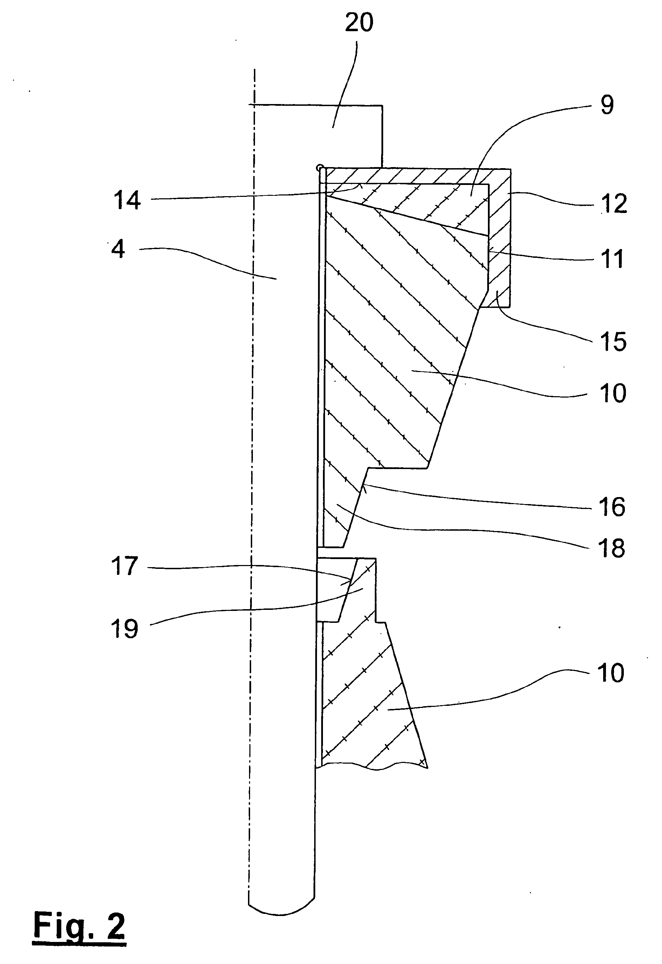

Einige Details der vorgeschlagenen Lösung ergeben sich aus dem Ausführungsbeispiel gemäß Fig. 2. Hier sind die Bauteile 9 aus weichem Material nicht - wie in Fig. 1 - im Radialschnitt rechteckig ausgebildet; sie weisen vielmehr eine Keilform auf. Dabei wird die axiale Erstreckung der Bauteile 9 mit wachsendem Abstand von der Achse größer.

Die hülsenförmigen Bauteile 12, 13 haben hier (dargestellt nur für das Bauteil 12) einen Hinterschnitt 15, der durch einen Umformvorgang erzeugt werden kann. Dieser Hinterschnitt 15 schafft die Möglichkeit, eine verliersichere Einheit vorzumontieren, was die Logistik wesentlich vereinfacht. Ebenso kann die erwünschte Funktion des Hinterschnitts - nämlich die einer verliersicheren Vormontage der einzelnen Bauteile - durch einen einfachen Pressverband zwischen den Bauteilen 10 und 12 bzw. 10 und 13 erreicht werden.

Damit die beiden Trägerelemente 5 und 6 bzw. 7 und 8 beim axialen Aufeinandertreffen sauber relativ zueinander geführt werden, sind an den Bauteilen 10 axiale Vorsprünge 18 bzw. 19 angeordnet, die mit einer Führungsfläche 16 bzw. 17 versehen sind. Die Führungsflächen 16, 17 korrespondieren zueinander, d. h. sie weisen vorliegend Kegelflächen mit gleichem Kegelwinkel auf. Treffen die Trägerelemente 5, 6, 7, 8 aufeinander, werden sie daher durch die Kegelflächen sicher geführt. Ebenso dienen diese Führungsflächen zusätzlich auch der besseren Einführung der Trägerelemente in die Durchgangsbohrung der zu klemmenden Teile 2 und 3 im Fahrwerk, wodurch die Montage des Befestigungselements 1 gemäß dessen Funktion sicherer gestaltet wird.

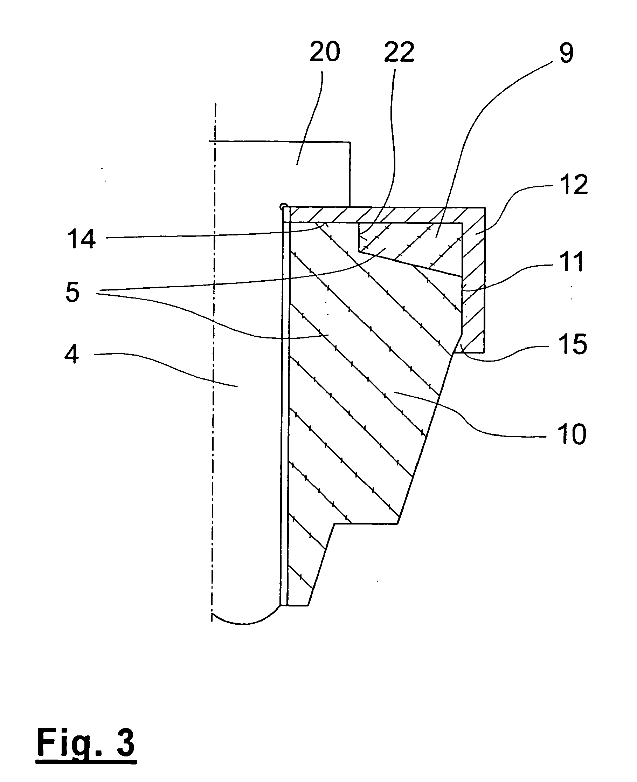

In Fig. 3 ist insoweit eine alternative Ausgestaltung der Erfindung zu sehen, als dass hier das aus den Bauteilen 9 und 10 bestehende Trägerelement 5 - Analoges kann natürlich auch für die anderen Trägerelemente 6, 7, 8 gelten - so ausgestaltet ist, dass das Bauteil 10 eine zylindrische Zentrierfläche 22 aufweist, die für die Zentrierung des Bauteils 9 sorgt. Die Zentrierfläche 22 dient dabei auch als radiale Randeinfassung des Bauteils 9 nach innen hin - ähnlich der des Randes 11 durch die Bauteile 12 und 13. Eine konische Ausbildung der Zentrierfläche 22 ist genauso möglich. Da das Bauteil 9 bevorzugt aus weicherem Material besteht als das Bauteil 10, wird das Bauteil 9 durch das Bauteil 10 und das hülsenförmige Bauteil 12 bei Beaufschlagung mit Kräften gut in Position gehalten.

Die verschiedenen Einzelteile werden durch die vorgeschlagene Ausgestaltung derart zusammengefügt, dass vormontierte Einheiten entstehen, die dem Anwender am Montageband den Einbau der Befestigungselemente in das Fahrwerk erleichtern, da die Anzahl der zu handhabenden teile geringer als bislang ist. Durch die vorgeschlagenen Trägerelemente mit Führungsflächen samt Vorsprüngen wird die Montagesicherheit des Befestigungselements am Fahrwerk erhöht.

### Bezugszeichenliste:

- 1: Befestigungselement
- 2: Teil
- 3: Teil
- 4: Achse
- 5: Trägerelement
- 6: Trägerelement
- 7: Trägerelement
- 8: Trägerelement
- 9: Bauteil
- 10: Bauteil
- 11: Rand
- 12: hülsenförmiges Bauteil
- 13: hülsenförmiges Bauteil
- 14: axiale Anlagefläche
- 15: Hinterschnitt
- 16: Führungsfläche
- 17: Führungsfläche
- 18: axialer Vorsprung
- 19: axialer Vorsprung
- 20: Kopf
- 21: Mutter
- 22: Zentrierfläche

## Patentansprüche

1. Befestigungselement (1) zur Verbindung zweier Teile (2, 3) in einem Fahrwerk, das eine zentrische Achse (4) aufweist, auf der in axialem Abstand zueinander mindestens zwei Trägerelemente (5, 6, 7, 8) aus dämpfendem Material angeordnet sind, wobei die beiden zu verbindenden Teile (2, 3) an zwei unterschiedlichen axialen Positionen der Achse (4) von dem Befestigungselement (1) gehalten werden,
wobei zumindest eines der Trägerelemente (5, 6, 7, 8) aus mindestens zwei unterschiedlichen Bauteilen (9, 10) aus zwei verschiedenen Materialien besteht,
wobei das eine Bauteil (10) aus einem elastischen, dämpfenden Material besteht, das eine größere Härte als das andere Bauteil (9) aufweist,
wobei das andere Bauteil (9) ebenfalls aus einem elastischen, dämpfenden Material besteht,
wobei das Bauteil (10) mit größerer Härte das zu verbindende Teil (2, 3) kontaktiert und das Bauteil (9) mit geringerer Härte von dem zu verbindenden Teil (2, 3) beabstandet ist,
wobei mindestens ein Trägerelement (5, 6, 7, 8) an seinem radial außenliegenden Rand (11) von einem zumindest abschnittsweise hülsenförmigen Bauteil (12, 13) eingefasst wird und
wobei das zumindest abschnittsweise hülsenförmige Bauteil (12, 13) einen Hinterschnitt (15) zur formschlüssigen Festlegung mindestens eines der Bauteile (9, 10) aufweist.

2. Befestigungselement nach Anspruch 1, **dadurch gekennzeichnet, dass** die beiden Bauteile (9, 10) aus verschiedenen Materialien konzentrisch um die Achse (4) und axial aneinander angrenzend angeordnet sind.

3. Befestigungselement nach Anspruch 1 oder 2, **dadurch gekennzeichnet, dass** eines der Bauteile (10) aus Kunststoff besteht, insbesondere aus Polyurethan.

4. Befestigungselement nach Anspruch 3, **dadurch gekennzeichnet, dass** das Bauteil (10) mit Verstärkungsfasern versehen ist, insbesondere mit Glasfasern oder Kohlenstofffasern.

5. Befestigungselement nach einem der Ansprüche 1 bis 4, **dadurch gekennzeichnet, dass** eines der Bauteile (9) aus elastomerem Material besteht, insbesondere aus einem Material auf Kautschukbasis oder auf Silikonbasis.

6. Befestigungselement nach einem der Ansprüche 1 bis 5, **dadurch gekennzeichnet, dass** die beiden Bauteile (9, 10) zu den Trägerelementen (5, 6, 7, 8) durch einen Montageprozess zusammengefügt werden.

7. Befestigungselement nach einem der Ansprüche 1 bis 5, **dadurch gekennzeichnet, dass** die beiden Bauteile (9, 10) der Trägerelemente (5, 6, 7, 8) durch einen Zwei-Komponenten-Spritzgießprozess hergestellt sind.

8. Befestigungselement nach einem der Ansprüche 1 bis 7, **dadurch gekennzeichnet, dass** eines der Bauteile (9) eine ringförmige Gestalt mit im Radialschnitt rechteckiger Form aufweist.

9. Befestigungselement nach einem der Ansprüche 1 bis 7, **dadurch gekennzeichnet, dass** eines der Bauteile (9) eine ringförmige Gestalt mit im Radialschnitt keilförmiger, kreisförmiger oder elliptischer Kontur aufweist.

10. Befestigungselement nach Anspruch 9, **dadurch gekennzeichnet, dass** die axiale Erstreckung des Bauteils (9) mit zunehmendem Abstand von der Achse (4) ansteigt.

11. Befestigungselement nach einem der Ansprüche 1 bis 10, **dadurch gekennzeichnet, dass** eines der Bauteile (10) eine Zentrierfläche (22), insbesondere eine zylindrisch geformte Zentrierfläche (22), für das andere Bauteil (9) aufweist.

12. Befestigungselement nach einem der Ansprüche 1 bis 11, **dadurch gekennzeichnet, dass** das zumindest abschnittsweise hülsenförmige Bauteil (12, 13) eine axiale Anlagefläche (14) für eines der Baueile (9, 10) aufweist.

13. Befestigungselement nach einem der Ansprüche 1 bis 12, **dadurch gekennzeichnet, dass** mindestens zwei axial aneinander angrenzende Trägerelemente (5, 6, 7, 8) mit korrespondierenden Führungsflächen (16, 17) versehen sind, die die beiden Trägerelemente (5, 6, 7, 8) bei einer relativen axialen Verschiebung zueinander führen.

14. Befestigungselement nach Anspruch 13, **dadurch gekennzeichnet, dass** die Führungsflächen (16, 17) im Radialschnitt eine kegelige Form aufweisen.

15. Befestigungselement nach Anspruch 13 oder 14, **dadurch gekennzeichnet, dass** die Führungsflächen (16, 17) an axialen Vorsprüngen (18, 19) der Trägerelemente (5, 6, 7, 8) angeordnet sind.

## Claims

1. Fastening element (1) for connecting two parts (2, 3) in a chassis, which has a central axle (4) on which at least two support elements (5, 6, 7, 8) of damping material are arranged at an axial distance from one another, wherein the two parts (2, 3), which are to be connected, are held at different axial positions of the axle (4) by the fastening element (1),
wherein at least one of the support elements (5, 6, 7, 8) consists of at least two different components (9, 10) made from two different materials,
wherein the one component (10) consists of an elastic, damping material which has a greater hardness than the other component (9),
wherein the other component (9) likewise consists of an elastic, damping material,
wherein the component (10) with the greater hardness contacts the part (2, 3) to be connected and the component (9) with the lower hardness is remote from the part (2, 3) to be connected,
wherein at least one support element (5, 6, 7, 8) is enclosed at its radially outer edge by a component (12, 13) which is sleeve-shaped at least in some sections and
wherein the component (12, 13) which is sleeve-shaped at least in some sections has an undercut (15) for the interlocking securing of at least one of the components (9, 10).

2. Fastening element according to claim 1, **characterized in that** the two components (9, 10) from different material are arranged concentrically around the axle (4) and axially adjacent to each other.

3. Fastening element according to claim 1 or 2, **characterized in that** one of the components (10) consists of plastic, in particular of polyurethane.

4. Fastening element according to claim 3, **characterized in that** the component (10) is provided with reinforcing fibres, in particular with glass fibres or carbon fibres.

5. Fastening element according to one of claims 1 to 4, **characterized in that** one of the components (9) consists of elastomeric material, in particular of a material based on rubber or based on silicone.

6. Fastening element according to one of claims 1 to 5, **characterized in that** the two components (9, 10) are joined together to form the support elements (5, 6, 7, 8) by an assembly process.

7. Fastening element according to one of claims 1 to 5, **characterized in that** the two components (9, 10) of the support elements (5, 6, 7, 8) are produced by a two-component injection-moulding process.

8. Fastening element according to one of claims 1 to 7, **characterized in that** one of the components (9) has an annular form with a rectangular shape in radial section.

9. Fastening element according to one of claims 1 to 7, **characterized in that** one of the components (9) has an annular form with a wedge-shaped, circular or elliptical contour in radial section.

10. Fastening element according to claim 9, **characterized in that** the axial extent of the component (9) increases with increasing distance from the axle (4).

11. Fastening element according to one of claims 1 to 10, **characterized in that** one of the components (10) has a centring surface (22), in particular a cylindrically shaped centring surface (22), for the other component (9).

12. Fastening element according to one of claims 1 to 11, **characterized in that** the component (12, 13) which is sleeve-shaped at least in some sections has an axial bearing surface (14) for one of the components (9, 10).

13. Fastening element according to one of claims 1 to 12, **characterized in that** at least two support elements (5, 6, 7, 8) which are axially adjacent to one another are provided with corresponding guide surfaces (16, 17) which guide the two support elements (5, 6, 7, 8) during a relative axial displacement with respect to each other.

14. Fastening element according to claim 13, **characterized in that** the guide surfaces (16, 17) have a conical shape in radial section.

15. Fastening element according to claim 13 or 14, **characterized in that** the guide surfaces (16, 17) are arranged on axial projections (18, 19) of the support elements (5, 6, 7, 8).

## Revendications

1. Elément de fixation (1) pour l'assemblage de deux pièces (2, 3) dans un châssis, qui présente un axe central (4) sur lequel sont disposés, à distance axiale l'un de l'autre, au moins deux éléments porteurs (5, 6, 7, 8) en matériau d'amortissement, les deux pièces (2, 3) à assembler étant maintenues en deux positions axiales différentes de l'axe (4) par l'élément de fixation (1),
au moins l'un des éléments porteurs (5, 6, 7, 8) se composant d'au moins deux composants différents (9, 10) en deux matériaux différents,
l'un des composants (10) se composant d'un matériau d'amortissement élastique qui présente une plus grande dureté que l'autre composant (9), l'autre composant (9) se composant également d'un matériau d'amortissement élastique,
le composant (10) de plus grande dureté venant en contact avec la pièce (2, 3) à assembler et le composant (9) de plus faible dureté étant espacé de la pièce (2, 3) à assembler,
au moins un élément porteur (5, 6, 7, 8) étant encadré au niveau de son bord (11) situé radialement à l'extérieur par un composant (12, 13) au moins partiellement en forme de douille, et le composant (12, 13) au moins partiellement en forme de douille présentant une contre-dépouille (15) pour la fixation par engagement positif d'au moins l'un des composants (9, 10).

2. Elément de fixation selon la revendication 1, **caractérisé en ce que** les deux composants (9, 10) en matériaux différents sont disposés concentriquement autour de l'axe (4) et de manière adjacente axialement l'un à l'autre.

3. Elément de fixation selon la revendication 1 ou 2, **caractérisé en ce que** l'un des composants (10) se compose de plastique, en particulier de polyuréthane.

4. Elément de fixation selon la revendication 3, **caractérisé en ce que** le composant (10) est pourvu de fibres de renforcement, en particulier de fibres de verre ou de fibres de carbone.

5. Elément de fixation selon l'une quelconque des revendications 1 à 4, **caractérisé en ce que** l'un des composants (9) se compose de matériau élastomère, en particulier d'un matériau à base de caoutchouc ou de silicone.

6. Elément de fixation selon l'une quelconque des revendications 1 à 5, **caractérisé en ce que** les deux composants (9, 10) sont assemblés pour former les éléments porteurs (5, 6, 7, 8) par un processus de montage.

7. Elément de fixation selon l'une quelconque des revendications 1 à 5, **caractérisé en ce que** les deux composants (9, 10) des éléments porteurs (5, 6, 7, 8) sont fabriqués par un processus de moulage par injection à deux composants.

8. Elément de fixation selon l'une quelconque des revendications 1 à 7, **caractérisé en ce que** l'un des composants (9) présente une forme annulaire avec une forme rectangulaire en coupe radiale.

9. Elément de fixation selon l'une quelconque des revendications 1 à 7, **caractérisé en ce que** l'un des composants (9) présente une forme annulaire avec un contour en forme de clavette, circulaire, ou elliptique en coupe radiale.

10. Elément de fixation selon la revendication 9, **caractérisé en ce que** l'étendue axiale du composant (9) augmente avec l'augmentation de la distance à l'axe (4).

11. Elément de fixation selon l'une quelconque des revendications 1 à 10, **caractérisé en ce que** l'un des composants (10) présente une surface de centrage (22), en particulier une surface de centrage de forme cylindrique (22), pour l'autre composant (9).

12. Elément de fixation selon l'une quelconque des revendications 1 à 11, **caractérisé en ce que** le composant (12, 13) au moins partiellement en forme de douille présente une surface d'appui axiale (14) pour l'un des composants (9, 10).

13. Elément de fixation selon l'une quelconque des revendications 1 à 12, **caractérisé en ce qu'**au moins deux éléments porteurs (5, 6, 7, 8) adjacents axialement l'un à l'autre sont pourvus de surfaces de guidage correspondantes (16, 17), qui guident l'un par rapport à l'autre les deux éléments porteurs (5, 6, 7, 8) dans le cas d'un déplacement relatif axial.

14. Elément de fixation selon la revendication 13, **caractérisé en ce que** les surfaces de guidage (16, 17) présentent en coupe radiale une forme conique.

15. Elément de fixation selon la revendication 13 ou 14, **caractérisé en ce que** les surfaces de guidage (16, 17) sont disposées sur des saillies axiales (18, 19) des éléments porteurs (5, 6, 7, 8).
